# FASCICULE DE BREVET EUROPEEN

(11) **EP 2 550 462 B1**
(45) Date de publication et mention de la délivrance du brevet: **13.08.2014**
(21) Numéro de dépôt: 11720129.3
(22) Date de dépôt: 24.03.2011
(51) Int. Cl.: F16C 13/04, F16C 17/02, F16C 27/02

(54) **PALIER HYDRODYNAMIQUE DESTINÉ À SOUTENIR UN CYLINDRE ANIMÉ D'UN MOUVEMENT DE ROTATION AUTOUR DE SON AXE**
HYDRODYNAMISCHES LAGER ZUR STÜTZUNG EINES DURCH ROTATION UM DIE EIGENE ACHSE ANGETRIEBENEN ZYLINDERS
HYDRODYNAMIC BEARING INTENDED TO SUPPORT A CYLINDER DRIVEN IN ROTATION ABOUT ITS AXIS

(30) Priorité: 25.03.2010 FR 1001194
(43) Date de publication de la demande: 30.01.2013
(73) Titulaire: Fives FCB, 59650 Villeneuve d'Ascq (FR)
(72) Inventeur: ROMERO, Eric, F-59195 Herin (FR)
(74) Mandataire: Bureau Duthoit Legros Associés
(86) Numéro de dépôt international: PCT/FR2011/000169
(87) Numéro de publication internationale: WO 2011/117482

(56) Documents cités:
- EP-A1- 1 430 951
- EP-A2- 0 486 371
- US-A- 5 114 244
- US-A- 5 743 475
- US-A- 5 938 344

## Description

L'invention concerne un palier hydrodynamique destiné à soutenir un cylindre animé d'un mouvement de rotation autour de son axe.

L'invention trouvera une application particulière pour le soutien et le guidage d'un cylindre creux tournant soumis à des forces inégalement réparties, tel que notamment celui d'un broyeur.

L'invention concernera également un broyeur équipé d'un palier hydrodynamique selon l'invention.

Afin de broyer finement des matériaux tels que des matières premières pour la fabrication de ciment, du clinker, ou encore de certains minerais, on connaît un broyeur constitué par un cylindre creux animé d'un mouvement de rotation sur son axe et dont la paroi interne constitue une piste circulaire. La matière est appliquée selon une couche sur la piste circulaire, le broyage étant obtenu grâce à un ou plusieurs rouleaux, internes au cylindre creux, d'axes parallèles audit cylindre creux, et appliqués sous pression, grâce à des vérins, sur la piste circulaire lors de la rotation du cylindre. Un tel broyeur est notamment enseigné du document EP-0.486.371. Les forces exercées par le ou les rouleaux entraînent une déformation dans le sens radial.

Le cylindre creux du broyeur est soutenu grâce à un ou plusieurs paliers dont la surface de guidage épouse la surface extérieure du cylindre creux.

Il est possible d'utiliser un seul palier ou deux groupes de paliers espacés, à condition que la direction radiale de la force résultante des charges se situe dans l'angle au centre défini par les extrémités les plus extérieures des paliers. Lorsque les paliers sont répartis en deux groupes situés de chaque côté de la direction radiale dans laquelle s'exerce la force maximale, la déformation du cylindre s'opère dans l'espace libre compris entre les paliers.

Lorsque le cylindre est supporté par un palier unique, la déformation élastique du cylindre s'opère au-dessus dudit palier et induit une réduction locale de l'épaisseur du film liquide qui se traduit par l'exercice au même endroit d'un excès de pression, au risque d'endommager le coussinet du palier. La réduction d'épaisseur est particulièrement significative dans le cas d'un cylindre de grandes dimensions, ayant notamment un diamètre supérieur à un mètre. Le document US 5114244, qui dévoile le préambule de la revendication 1, décrit un tel coussinet.

Le but de la présente invention est donc de pallier les inconvénients précités en proposant un palier hydrodynamique permettant le soutien et le guidage d'un cylindre soumis à des forces inégalement réparties.

L'invention concernera également un broyeur équipé d'un palier hydrodynamique conforme à l'invention, plus particulièrement, mais non exclusivement dans le cas d'un broyeur à rouleau unique.

D'autres buts et avantages de la présente invention apparaîtront au cours de la description qui va suivre qui n'est donnée qu'à titre indicatif et qui n'a pas pour but de la limiter.

L'invention concerne tout d'abord un palier hydrodynamique destiné à soutenir un cylindre, creux, éventuellement déformable dans le sens radial, animé d'un mouvement de rotation autour de son axe, ledit palier consistant essentiellement en un coussinet et un support de coussinet, et dans lequel ledit coussinet s'étend selon une portion de cylindre d'axe δ, présentant une surface de guidage, de rayon de courbure correspondant au rayon de courbure dudit cylindre, destinée à épouser la surface extérieure dudit cylindre par l'intermédiaire d'un film de lubrifiant, et une surface solidaire dudit support de coussinet opposée à ladite surface de guidage.

Selon l'invention, le diamètre dudit cylindre est supérieur ou égal à un mètre et le coussinet est dans un métal de faible dureté, ledit support de coussinet étant dans un métal de dureté supérieure au métal dudit coussinet, ledit support de coussinet reprenant les efforts sur toute la surface dudit coussinet opposée à la surface de guidage, sans discontinuité de contact afin de maîtriser la déformation dudit coussinet, le support de coussinet présentant au moins au niveau d'une zone intermédiaire dudit palier, des moyens d'affaiblissement de section conférant audit support de coussinet une élasticité, autorisant une déformation élastique dudit palier de telle façon à limiter la valeur maximale des efforts de guidage sur ledit coussinet.

Le palier conforme à l'invention permet ainsi de réduire l'excès de pression localisée, et ainsi le risque d'endommagement du coussinet et du palier, en donnant une flexibilité de sorte que le palier se déforme de lui-même légèrement de façon élastique à l'endroit où la force maximale s'exerce, s'opposant ainsi à la diminution d'épaisseur du film de lubrifiant.

Dans un système où les forces varient dans le temps, l'invention permet au palier de s'adapter en permanence, la compensation apportée par l'élasticité du support étant d'autant plus importante que le niveau des forces exercées est élevé.

Selon des caractéristiques optionnelles :
- les moyens d'affaiblissement de section s'étendent, selon une direction parallèle à l'axe δ, sur toute la longueur dudit palier,
- lesdits moyens d'affaiblissement de section sont constitués par un ou plusieurs évidements,
- le support de coussinet est monobloc, les moyens d'affaiblissement de section constitués par un évidement oblong s'étendant parallèlement à la courbure du coussinet, ledit évidement oblong étant traversant selon une direction parallèle audit axe δ,
- le support de coussinet est monobloc, lesdits moyens d'affaiblissement de section étant constitués par un évidement oblong s'étendant parallèlement à une tangente audit cylindre δ, ledit évidement oblong étant traversant selon une direction parallèle audit axe δ,
- le support de coussinet est monobloc, les moyens d'affaiblissement de section étant constitués par un ensemble d'évidements, parallèles entre eux et traversants selon une direction parallèle audit axe δ, lesdits évidements étant répartis selon une configuration reprenant la courbure du coussinet,
- les évidements traversants sont fermés par des flasques de telle façon à constituer une ou plusieurs chambres dans ledit support de coussinet, ladite chambre ou chacune des chambres étant étanche pour un liquide sous pression, ladite chambre ou chacune des chambres présentant une entrée pour un liquide permettant de régler la pression dans ladite chambre,
- selon une alternative, les moyens d'affaiblissement de section s'étendent, selon une direction parallèle à l'axe δ, sur une zone intermédiaire dudit palier, à l'exception de ses extrémités,
- notamment les moyens d'affaiblissement de section peuvent être constitués par une section d'épaisseur limitée, inférieure à l'épaisseur dudit support de coussinet à ses extrémités,
- éventuellement, les extrémités dudit coussinet, selon une direction parallèle à l'axe δ, d'épaisseur supérieure à l'épaisseur de ladite section d'épaisseur limitée peuvent être constituées par des éléments distincts de la partie de support du coussinet de section d'épaisseur limitée.

L'invention concerne également l'utilisation dudit palier hydrodynamique conforme à l'invention pour le soutien et le guidage d'un cylindre tournant, creux, éventuellement déformable dans le sens radial soumis intérieurement à des forces inégalement réparties, notamment d'un broyeur.

L'invention concernera également un broyeur comprenant au moins :
- un cylindre creux dont la paroi interne forme une piste circulaire,
- un rouleau apte à rouler sur la piste circulaire,
- des moyens pour appliquer ledit rouleau sur la piste circulaire selon une force donnée,
- des moyens pour soutenir le cylindre creux et le guider en rotation.

Selon l'invention, les moyens pour soutenir le cylindre creux et le guider en rotation comprennent au moins un palier hydrodynamique conforme à l'invention, lesdits moyens d'affaiblissement de section dudit palier hydrodynamique étant positionnés au niveau de la zone d'application des efforts exercés par ledit rouleau sur ledit cylindre creux.

L'invention sera mieux comprise à la lecture de la description suivante accompagnée des dessins en annexe parmi lesquels :
- la figure 1 est une vue schématique d'un broyeur à cylindre creux et rouleau équipé d'un palier hydrodynamique conforme à l'invention selon un mode de réalisation,
- la figure 2 est une vue d'un broyeur à cylindre creux et rouleau équipé d'un palier hydrodynamique conforme à l'invention selon un second mode de réalisation,
- la figure 3 est une vue d'un broyeur à cylindre creux et rouleau équipé d'un palier hydrodynamique conforme à l'invention selon un troisième mode de réalisation,
- la figure 4 est une vue d'un broyeur à cylindre creux et rouleau équipé d'un palier hydrodynamique conforme à l'invention selon un quatrième mode de réalisation,
- la figure 5 est une vue selon la coupe IV-IV du palier tel qu'illustré à la figure 4,
- la figure 6 est une vue selon une alternative, de la coupe IV-IV du palier tel qu'illustré à la figure 4.

L'invention concerne tout d'abord un palier hydrodynamique 1, destiné à soutenir un cylindre 2 animé d'un mouvement de rotation autour de son axe.

Le diamètre du cylindre est supérieur ou égal à un mètre. Le cylindre est creux, éventuellement déformable dans le sens radial.

Ledit palier consiste essentiellement en un coussinet 3, notamment d'un métal de faible dureté, telle que bronze ou le régule ou un autre métal anti-friction, et d'un support de coussinet, notamment dans un métal de dureté supérieure audit coussinet, tel que par exemple un acier.

Le coussinet 3, notamment d'épaisseur constante, s'étend selon une portion de cylindre d'axe δ et présente une surface de guidage 31, destinée à épouser la surface extérieure du cylindre par l'intermédiaire d'un film de lubrifiant.

Cette surface de guidage 31 présente un rayon de courbure correspondant à celui dudit cylindre 2 (supérieur ou égal à 0,5 m).

Le coussinet 3 présente également une surface 32 solidaire dudit support de coussinet 4.

Tel qu'illustré, le support de coussinet 4 vient reprendre les efforts sur toute la surface 32 du coussinet, opposé à la surface de guidage 31, sans discontinuité de contact, afin de maîtriser la déformation dudit coussinet 3.

Selon l'invention, le support de coussinet 4 présente, le cas échéant localement, au moins au niveau d'une zone intermédiaire dudit palier, des moyens 5 ; 6 ; 7 ; 8 d'affaiblissement de section, autorisant une déformation élastique dudit palier de telle façon à limiter la valeur maximale des efforts de guidage sur ledit coussinet 3.

Ces moyens d'affaiblissement permettent ainsi au coussinet 3 de se déformer de manière limitée, et ainsi d'obtenir une répartition plus homogène des efforts de guidage sur le coussinet.

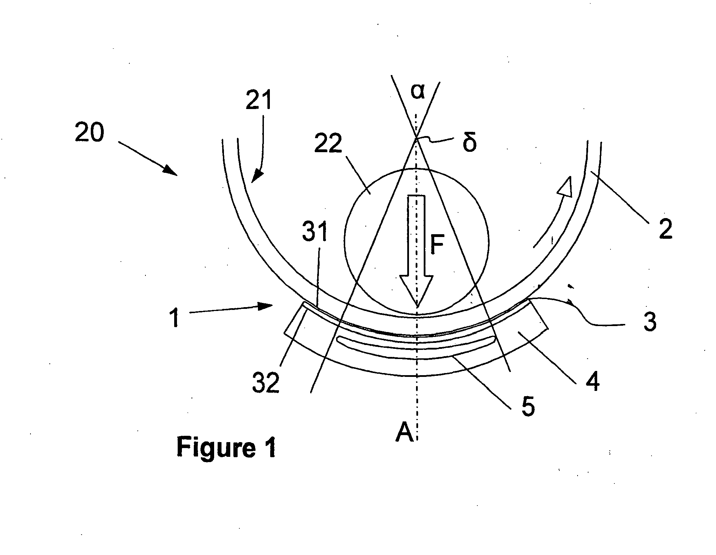

Selon les exemples des figures 1, 2 ou 3, les moyens d'affaiblissement de section peuvent s'étendre, selon une direction parallèle à l'axe δ, sur toute la longueur dudit palier, et sont notamment constitués par un ou plusieurs évidements 5 ; 6 ; 7 traversants.

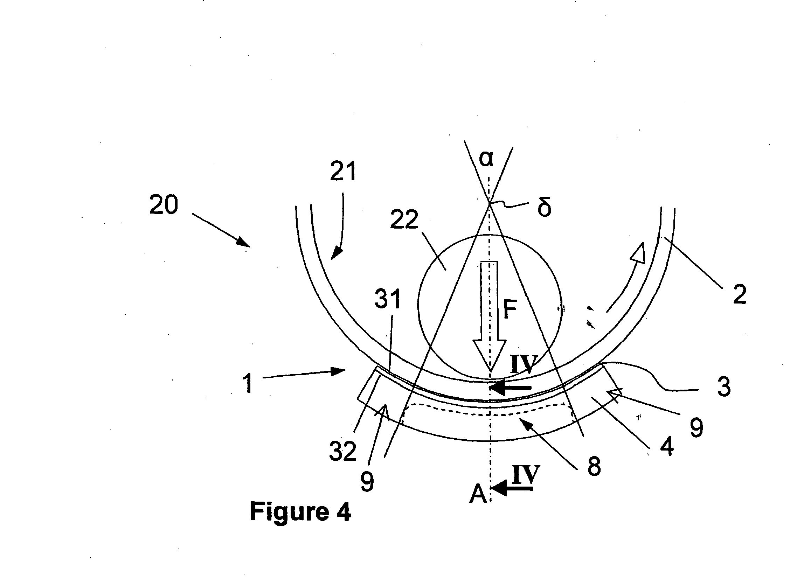

Selon un autre mode de réalisation illustré notamment aux figures 4, 5 et 6, les moyens d'affaiblissement de section peuvent s'étendre, selon une direction parallèle à l'axe δ sur une zone intermédiaire dudit palier, à l'exception de ses extrémités 10, 11 ; 10', 11' et être constitués notamment par une section d'épaisseur limitée inférieure à l'épaisseur dudit support de coussinet 4 à ses extrémités.

Le palier hydrodynamique conforme à l'invention trouvera une application particulière pour le soutien et le guidage d'un cylindre tournant creux, éventuellement déformable dans le sens radial et soumis à des forces inégalement réparties tel que celui d'un broyeur.

L'invention concerne également un broyeur 20 comprenant au moins :
- un cylindre creux 2 dont la paroi interne forme une piste circulaire 21,
- un rouleau 22 apte à rouler sur la piste circulaire 21,
- des moyens pour appliquer ledit rouleau 22 sur la piste circulaire selon une force donnée,
- des moyens pour soutenir ledit cylindre creux et le guider en rotation.

Selon l'invention, les moyens pour soutenir ledit cylindre creux et le guider en rotation comprennent au moins un palier hydrodynamique 1, selon l'invention, les moyens 5 ; 6 ; 7 ; 8 d'affaiblissement de section dudit palier hydrodynamique 1 étant positionnés au niveau de la zone d'application des efforts exercés par ledit rouleau 22 sur ledit cylindre creux 2.

Nous décrivons maintenant en détail les exemples des figures 1 à 6. On note que les broyeurs exemple des figures 1 à 4 sont à rouleau unique et à palier hydrodynamique unique.

La figure 1 est une vue schématique selon une coupe verticale d'un broyeur 20 conforme à l'invention. Ce broyeur comprend un cylindre creux 2, dont le diamètre est d'au moins un mètre et la paroi interne forme une piste circulaire 21, qui peut être animée en rotation autour de son axe grâce à un dispositif non représenté coopérant. Un tel cylindre est susceptible d'être déformé dans le sens radial sous l'action des contraintes auxquelles il est soumis.

Il présente un rouleau 22 d'axe parallèle à l'axe du cylindre creux 2 apte à rouler sur la piste circulaire et des moyens pour appliquer ledit rouleau 22 sur la piste circulaire selon une force donnée, notamment constituée par un ou plusieurs vérins hydrauliques.

Un palier hydrodynamique 1 selon l'invention est positionné au droit des efforts F exercés par le rouleau 22 sur le cylindre creux 2, lesdits moyens 5 d'affaiblissement de section étant positionnés au niveau de la zone d'application des efforts exercés par ledit rouleau 22.

Plus particulièrement, le palier 1 est constitué d'un coussinet 3 d'épaisseur sensiblement constante s'étendant selon une portion de cylindre d'axe δ. Ce coussinet présente une surface de guidage 31, destiné à épouser la surface extérieure du cylindre 2, notamment creux, par l'intermédiaire d'un film de lubrifiant et une surface solidaire 32 dudit support de coussinet 4.

Selon cet exemple de la figure 1, le support de coussinet 4 est monobloc, notamment métallique par exemple en acier. Les moyens d'affaiblissement de section sont constitués par un évidement oblong 5, de section fermée, s'étendant parallèlement à la courbure du coussinet 3 et traversants selon une direction parallèle audit axe δ. Dans l'autre direction, perpendiculaire à l'axe δ, l'évidement 5 s'étend uniquement localement sur une zone intermédiaire dudit palier comprise dans un angle α dont le centre est sur l'axe δ.

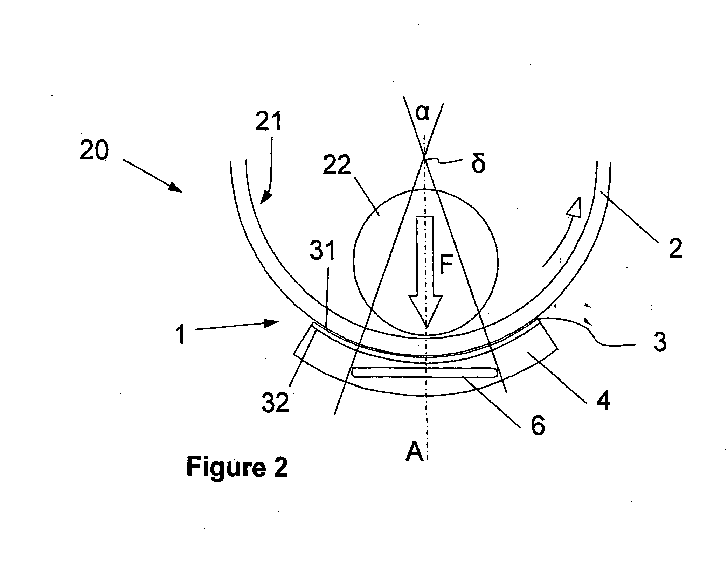

L'exemple de la figure 2 se distingue de l'exemple de la figure 1 par la forme de l'évidement oblong 6 qui s'étend parallèlement à une tangente audit cylindre d'axe δ, notamment perpendiculaire à la direction des efforts F du rouleau 22 sur le cylindre creux 2. Cet évidement oblong 6 est également traversant selon une direction parallèle audit axe δ, et de section fermée.

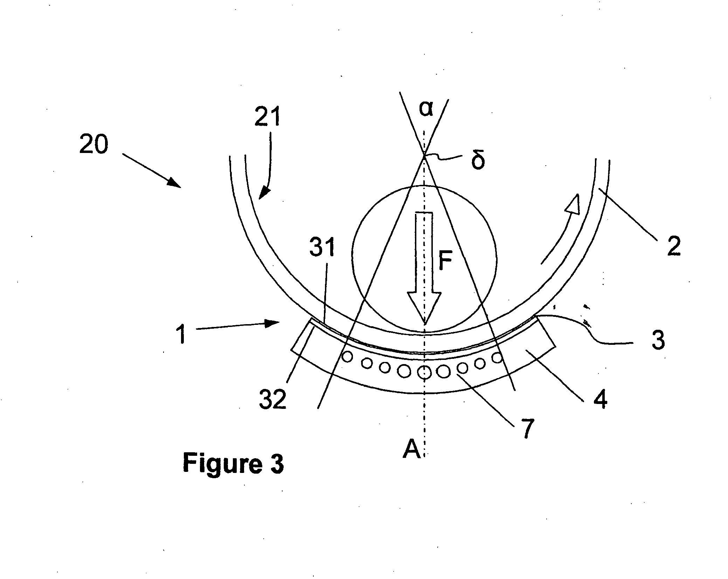

L'exemple de la figure 3 se distingue des exemples précédents en ce que les moyens d'affaiblissement de section sont constitués par un ensemble d'évidements 7, de section fermée, parallèles entre eux et traversants selon une direction parallèle audit axe δ. Selon l'exemple de la figure 3, les évidements 7 sont répartis selon une configuration reprenant la courbure du coussinet 3, au repos.

Avantageusement, selon un mode de réalisation, l'évidement 5, 6 des exemples des figures 1, 2 ou les évidements 7 de l'exemple de la figure 7 peuvent être fermés par des flasques de telle façon à constituer une ou plusieurs chambres dans le support de coussinet 4.

La ou chacune des chambres sont étanches pour un liquide sous pression, ladite chambre ou chacune des chambres présentant une entrée pour un liquide permettant de régler la pression dans ladite chambre. Il est ainsi possible, en contrôlant la pression du fluide à l'intérieur de la ou de chacune des chambres de régler l'élasticité du palier selon les conditions de fonctionnement. A cet effet, le palier sera associé à une pompe hydraulique et d'un dispositif de contrôle permettant d'ajuster la pression de liquide dans le palier.

L'exemple de la figure 4 se distingue des exemples des figures 1 à 3 en ce que les moyens d'affaiblissement de section ne s'étendent que partiellement selon l'axe δ, sur une zone intermédiaire dudit palier 1, à l'exception de ses extrémités 10, 11 ; 10', 11' et en ce que les moyens d'affaiblissement de section sont constitués par une section d'épaisseur limitée, inférieure à l'épaisseur dudit support de coussinet 4 à ses extrémités 9, 10, 11 ; 9', 10', 11'.

Les extrémités 10, 11 ou 10', 11' sont les extrémités du support de coussinet 4 selon l'axe δ. Les extrémités 9 sont les extrémités du support de coussinet 4 selon une direction transversale à la direction d'axe δ.

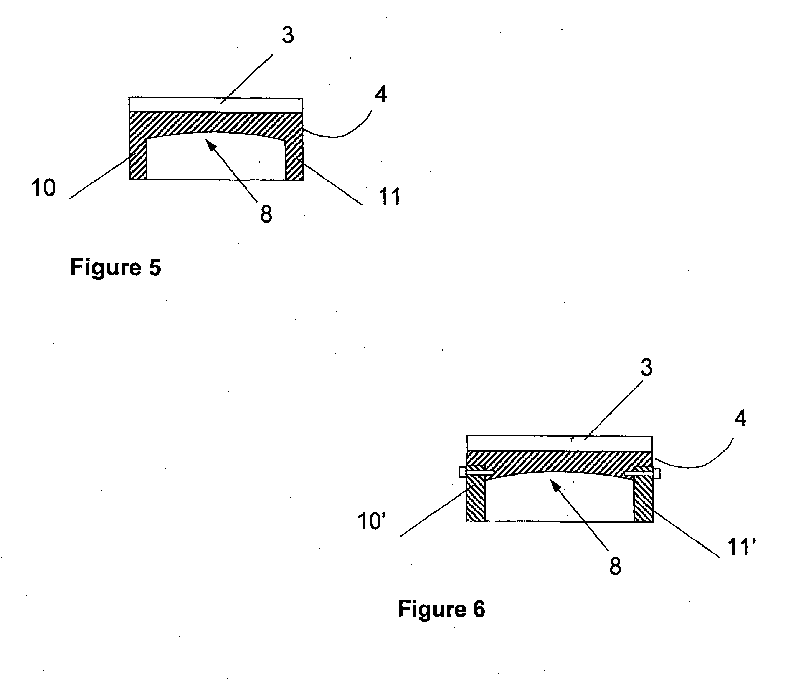

Selon l'exemple de la figure 4, on remarque que la section d'épaisseur limitée 8 s'étend selon une direction perpendiculaire à l'axe δ partiellement, sur une zone intermédiaire dudit palier, comprise dans un angle α ayant son centre situé sur l'axe δ, les extrémités 9 du support de coussinet 4 du palier étant d'épaisseur bien supérieure, selon cette direction. En outre, cette section d'épaisseur limitée 8, telle qu'illustrée selon la vue de coupe de la figure 5 s'étend également localement, selon une direction parallèle à l'axe parallèle δ, sur une zone intermédiaire dudit palier, les extrémités 10, 11 du support de coussinet 4 du palier selon cette direction étant d'épaisseur bien supérieure à ladite section 8.

Selon la figure 5, on remarque que ses extrémités 10, 11 ainsi que la section d'épaisseur limitée 8 dudit support de coussinet 4 sont monoblocs. L'exemple de réalisation de la figure 6 se distingue de la figure 5 en ce que les extrémités 10', 11' du support de coussinet sont constituées par des éléments distincts de la partie de support de coussinet 4 de section d'épaisseur limitée 8. Ces éléments 10', 11' sont assujettis au corps du coussinet par tout moyen approprié, notamment soudage, ou encore système de vis.

Naturellement, d'autres modes de réalisation auraient pu être envisagés par l'homme de l'art sans pour autant sortir du cadre de l'invention définie par les revendications ci-après.

## Revendications

1. Palier hydrodynamique (1) destiné à soutenir un cylindre (2), creux, éventuellement déformable dans le sens radial, animé d'un mouvement de rotation autour de son axe, ledit palier (1) consistant essentiellement en un coussinet (3) et un support de coussinet (4), et dans lequel ledit coussinet (3) s'étend selon une portion de cylindre d'axe δ, présentant une surface de guidage (31), de rayon de courbure correspondant au rayon de courbure dudit cylindre (2), destinée à épouser la surface extérieure dudit cylindre (2) par l'intermédiaire d'un film de lubrifiant, et une surface (32) solidaire dudit support de coussinet (4) opposée à ladite surface de guidage (31) **caractérisé en ce que** le diamètre dudit cylindre est supérieur ou égal à un mètre et **en ce que** le coussinet (3) est dans un métal de faible dureté, ledit support de coussinet (4) étant dans un métal de dureté supérieure au métal dudit coussinet (3), ledit support de coussinet (4) reprenant les efforts sur toute la surface (32) dudit coussinet (3) opposée à la surface de guidage (31), sans discontinuité de contact afin de maîtriser la déformation dudit coussinet (3), le support de coussinet (4) présentant au moins au niveau d'une zone intermédiaire dudit palier (1), des moyens (5 ; 6 ; 7 ; 8) d'affaiblissement de section conférant audit support de coussinet (4) une élasticité, autorisant une déformation élastique dudit palier (1) de telle façon à limiter la valeur maximale des efforts de guidage sur ledit coussinet (3).

2. Palier selon la revendication 1, dans lequel lesdits moyens d'affaiblissement de section sont constitués par un ou plusieurs évidements (5 ; 6 ; 7).

3. Palier selon la revendication 1 ou 2, dans lequel lesdits moyens (5 ; 6 ; 7) d'affaiblissement de section s'étendent, selon une direction parallèle à l'axe δ, sur toute la longueur dudit palier (1).

4. Palier selon l'une des revendications 1 à 3, dans lequel le support de coussinet (4) est monobloc et dans lequel lesdits moyens d'affaiblissement de section sont constitués par un évidement oblong (5), de section fermée, s'étendant parallèlement à la courbure du coussinet (3), ledit évidement oblong (5) étant traversant selon une direction parallèle audit axe δ.

5. Palier selon l'une des revendications 1 à 3, dans lequel le support de coussinet (4) est monobloc et dans lequel lesdits moyens d'affaiblissement de section sont constitués par un évidement oblong (6), de section fermée, s'étendant parallèlement à une tangente audit cylindre d'axe δ, ledit évidement oblong (6) étant traversant selon une direction parallèle audit axe δ.

6. Palier selon l'une des revendications 1 à 3, dans lequel le support de coussinet (4) est monobloc et dans lequel lesdits moyens d'affaiblissement de section sont constitués par un ensemble d'évidements (7), de sections fermées, parallèles entre eux et traversants selon une direction parallèle audit axe δ, lesdits évidements (7) étant répartis selon une configuration reprenant la courbure du coussinet (3).

7. Palier selon l'une des revendications 2 à 6, dont le ou chaque évidement constitue une chambre dans ledit support de coussinet (4), ladite chambre ou chacune des chambres étant étanche pour un liquide sous pression, ladite chambre ou chacune des chambres présentant une entrée pour un liquide sous pression permettant de régler la pression dans ladite chambre.

8. Palier selon la revendication 1 ou 2, dans lequel lesdits moyens d'affaiblissement de section s'étendent, selon une direction parallèle à l'axe δ, sur une zone intermédiaire dudit palier, à l'exception de ses extrémités (10, 11 ; 10', 11').

9. Palier selon la revendication 8, dans lequel lesdits moyens d'affaiblissement de section sont constitués par une section d'épaisseur limitée (8), inférieure à l'épaisseur dudit support de coussinet (4) à ses extrémités (9, 10, 11 ; 9, 10', 11').

10. Palier selon la revendication 9, dans lequel les extrémités (10', 11') dudit coussinet selon une direction parallèle à l'axe δ sont constituées par des éléments distincts de la partie de support de coussinet (4) de section d'épaisseur limitée (8).

11. Palier selon l'une des revendications 1 à 10, dans lequel ledit coussinet (4) est d'épaisseur constante.

12. Palier selon l'une des revendications 1 à 11, dans lequel le métal du coussinet (3) est du bronze, le régule ou un autre métal anti-friction et le métal du support de coussinet (4) est un acier.

13. Utilisation dudit palier hydrodynamique selon l'une des revendications 1 à 12 pour le soutien et le guidage d'un cylindre tournant, creux, éventuellement déformable dans le sens radial et soumis intérieurement à des forces (F) inégalement réparties, tel que notamment celui d'un broyeur.

14. Broyeur (20) comprenant au moins :
- un cylindre creux (2) dont la paroi interne forme une piste circulaire (21),
- un rouleau (22) apte à rouler sur la piste circulaire,
- des moyens pour appliquer ledit rouleau (22) sur la piste circulaire selon une force donnée,
- des moyens pour soutenir ledit cylindre creux et le guider en rotation,
**caractérisé en ce que** lesdits moyens pour soutenir ledit cylindre creux et le guider en rotation comprennent au moins un palier hydrodynamique (1) selon l'une des revendications 1 à 8, les moyens (5 ; 6 ; 7 ; 8) d'affaiblissement de section dudit palier hydrodynamique (1) étant positionnés au niveau de la zone d'application des efforts exercés par ledit rouleau (22) sur ledit cylindre creux (2).

15. Broyeur (20) selon la revendication 14, dans lequel ledit broyeur est à rouleau (22) unique et à palier hydrodynamique unique.

## Patentansprüche

1. Hydrodynamisches Lager (1), das dazu bestimmt ist, einen hohlen, eventuell in Radialrichtung verformbaren Zylinder (2) zu tragen, der eine Drehbewegung um seine Achse ausführt, wobei das Lager (1) im Wesentlichen in einer Lagerschale (3) und einem Schalenträger (4) besteht, wobei sich die Lagerschale (3) entlang eines Zylinderabschnitts mit der Achse δ erstreckt, der eine Führungsfläche (31) mit einem Krümmungsradius aufweist, der dem Krümmungsradius des Zylinders (2) entspricht, die dazu bestimmt ist, sich an die Außenfläche des Zylinders (2) mit Hilfe einer Schmiermittelschicht anzulegen, und eine Fläche (32), die mit dem Schalenträger (4) verbunden ist und der Führungsfläche (31) gegenüberliegt, **dadurch gekennzeichnet, dass** der Durchmesser des Zylinders größer oder gleich einem Meter ist, und dass die Lagerschale (3) aus einem Metall von geringer Härte ist, wobei der Lagerträger (4) aus einem Metall von größerer Härte als das Metall der Lagerschale (3) ist, wobei der Schalenträger (4) die Kräfte auf der gesamten Fläche (32) der Lagerschale (3), die der Führungsfläche (31) gegenüberliegt, ohne Kontaktunterbrechung, um die Verformung der Lagerschale (3) zu steuern, aufnimmt, wobei der Schalenträger (4) mindestens im Bereich einer Zwischenzone des Lagers (1) Mittel (5; 6; 7; 8) zur Querschnittsverminderung aufweist, die dem Schalenträger (4) eine Elastizität verleihen, die eine elastische Verformung des Lagers (1) gestattet, um den Maximalwert der Führungskräfte auf der Lagerschale (3) zu begrenzen.

2. Lager nach Anspruch 1, bei dem die Querschnittsverminderungsmittel von einer oder mehreren Ausnehmungen (5; 6; 7) gebildet sind.

3. Lager nach Anspruch 1 oder 2, bei dem sich die Querschnittsverminderungsmittel (5; 6; 7) in eine Richtung parallel zur Achse δ auf der gesamten Länge des Lagers (1) erstrecken.

4. Lager nach einem der Ansprüche 1 bis 3, bei dem der Schalenträger (4) einstückig ist, und bei dem die Querschnittsverminderungsmittel von einer länglichen Ausnehmung (5) mit geschlossenem Querschnitt gebildet sind, die sich parallel zur Krümmung der Lagerschale (3) erstreckt, wobei die längliche Ausnehmung (5) in einer Richtung parallel zur Achse δ durchgehend ist.

5. Lager nach einem der Ansprüche 1 bis 3, bei dem der Schalenträger (4) einstückig ist, und bei dem die Querschnittsverminderungsmittel von einer länglichen Ausnehmung (6) mit geschlossenem Querschnitt gebildet sind, die sich parallel zu einer Tangente an den Zylinder mit der Achse δ erstreckt, wobei die längliche Ausnehmung (6) in eine Richtung parallel zur Achse δ durchgehend ist.

6. Lager nach einem der Ansprüche 1 bis 3, bei dem der Schalenträger (4) einstückig ist, und bei dem die Querschnittsverminderungsmittel von einer Einheit von Ausnehmungen (7) mit geschlossenen Querschnitten gebildet ist, die zueinander parallel und in eine Richtung parallel zur Achse δ durchgehend sind, wobei die Ausnehmungen (7) nach einer Konfiguration verteilt sind, die die Krümmung der Lagerschale (3) aufgreift.

7. Lager nach einem der Ansprüche 2 bis 6, bei dem die oder jede Ausnehmung eine Kammer in dem Schalenträger (4) darstellt, wobei die Kammer oder jede der Kammern für eine Druckflüssigkeit dicht ist, wobei die Kammer oder jede der Kammern einen Eingang für eine Druckflüssigkeit umfasst, der es ermöglicht, den Druck in der Kammer zu regeln.

8. Lager nach Anspruch 1 oder 2, bei dem sich die Querschnittsverminderungsmittel in eine Richtung parallel zur Achse δ auf einer Zwischenzone des Lagers mit Ausnahme seiner Enden (10, 11; 10', 11') erstrecken.

9. Lager nach Anspruch 8, bei dem die Querschnittsverminderungsmittel von einem Querschnitt mit begrenzter Dicke (8), die geringer als die Dicke des Schalenträgers (4) an seinen Enden (9, 10, 11; 9', 10', 11') ist, gebildet sind.

10. Lager nach Anspruch 9, bei dem die Enden (10', 11') der Lagerschale in eine Richtung parallel zur Achse δ von getrennten Elementen des Schalenträgerteils (4) mit einem Querschnitt von begrenzter Dicke (8) gebildet sind.

11. Lager nach einem der Ansprüche 1 bis 10, bei dem die Lagerschale (4) von konstanter Dicke ist.

12. Lager nach einem der Ansprüche 1 bis 11, bei dem das Metall der Lagerschale (3) Bronze, Weißmetall oder ein anderes Antifriktionsmetall ist, und das Metall des Schalenträgers (4) Stahl ist.

13. Verwendung des hydrodynamischen Lagers nach einem der Ansprüche 1 bis 12 für eine Unterstützung und Führung eines hohlen Drehzylinders, der eventuell in Radialrichtung verformbar ist und im Inneren ungleich verteilten Kräften (F) ausgesetzt ist, wie insbesondere jenes eines Zerkleinerers.

14. Zerkleinerer (20), mindestens umfassend:
- einen Hohlzylinder (2), dessen Innenwand eine kreisförmige Bahn bildet,
- eine Walze (22), die auf der kreisförmigen Bahn rollen kann,
- Mittel, um die Walze (22) an die kreisförmige Bahn mit einer gegebenen Kraft anzulegen,
- Mittel, um den Hohlzylinder zu unterstützen und ihn in Drehung zu führen,
**dadurch gekennzeichnet, dass** die Mittel zur Unterstützung des Hohlzylinders und zu dessen Führung bei der Drehung mindestens ein hydrodynamisches Lager (1) nach einem der Ansprüche 1 bis 8 umfassen, wobei die Querschnittsverminderungsmittel (5; 6; 7; 8) des hydrodynamischen Lagers (1) auf Höhe der Zone des Anlegens der Kräfte, die von der Walze (22) auf den Hohlzylinder (2) ausgeübt werden, positioniert sind.

15. Zerkleinerer (20) nach Anspruch 14, bei dem der Zerkleinerer mit einer einzigen Walze (22) und einem einzigen hydrodynamischen Lager ausgestattet ist.

## Claims

1. Hydrodynamic bearing (1) intended to support a cylinder (2), hollow, possibly deformable in the radial direction, driven in a rotation movement about its axis, said bearing (1) consisting essentially of a shell (3) and a shell support (4), and in which said shell (3) extends in a portion of a cylinder of axis δ, having a guide surface (31), with a radius of curvature corresponding to the radius of curvature of said cylinder (2), intended to match the external surface of said cylinder (2) through a film of lubricant, and a surface (32) secured to said shell support (4), opposite to said guide surface (31), **characterized in that** the diameter of said cylinder is greater than or equal to one meter and **in that** the shell (3) is made from a soft metal, said shell support (4) being made from a metal with a hardness greater than the metal of said shell (3), said shell support (4) absorbing the forces over the entire surface (32) of said shell (3) opposite to the guide surface (31), without any discontinuity of contact in order to control the deformation of said shell (3), the shell support (4) having, at least at an intermediate area of said bearing (1), means (5; 6; 7; 8) of weakening the cross section conferring on said shell support (4) an elasticity, allowing an elastic deformation of said bearing (1) so as to limit the maximum value of the guide forces on said shell (3).

2. Bearing according to claim 1, in which said means of weakening the cross section are formed by one of more recesses (5; 6; 7).

3. Bearing according to claim 1 or 2, in which said means (5; 6; 7) of weakening the cross section extend, in a direction parallel to the axis δ, over the entire length of said bearing (1).

4. Bearing according one of claims 1 to 3, in which the shell support (4) is in a single piece and in which said means of weakening the cross section are formed by an oblong recess (5), with a closed cross section, extending parallel to the curvature of the shell (3), said oblong recess (5) passing through in a direction parallel to said axis δ.

5. Bearing according one of claims 1 to 3, in which the shell support (4) is in a single piece and in which said means of weakening the cross section are formed by an oblong recess (6), with a closed section, extending parallel to a tangent to said cylinder of axis δ, said oblong recess (6) passing through in a direction parallel to said axis δ.

6. Bearing according to one of claims 1 to 3, in which the shell support (4) is in a single piece and in which said means of weakening the cross section are formed by a set of recesses (7), with closed sections, parallel to each other and passing through in a direction parallel to said axis δ, said recesses (7) being distributed in a configuration repeating the curvature of the shell (3).

7. Bearing according to one of claims 2 to 6, the or each recess of which constitutes a chamber in said shell support (4), said chamber or each of the chambers being sealed for a pressurized liquid, said chamber or each of the chambers having an inlet for a pressurized liquid making it possible to adjust the pressure in said chamber.

8. Bearing according to claim 1 or 2, in which said means of weakening the cross section extend, in a direction parallel to the axis δ, over an intermediate area of said bearing with the exception of its ends (10, 11; 10', 11').

9. Bearing according to claim 8, in which said means of weakening the cross section are formed by a section of limited thickness (8), less than the thickness of said shell support (4) at it ends (9, 10, 11; 9', 10', 11').

10. Bearing according to claim 9, in which the ends (10', 11') of said shell in a direction parallel to the axis δ are formed by elements distinct from the shell support part (4) with a section of limited thickness (8).

11. Bearing according to one of claims 1 to 10, in which said shell support (4) is of constant thickness.

12. Bearing according one of claims 1 to 11, in which the metal of the shell (3) is bronze, white metal or another antifriction metal and the metal of the shell support (4) is steel.

13. Use of said hydrodynamic bearing according to one of claims 1 to 12 for supporting and guiding a rotating cylinder, hollow, possibly deformable in the radial direction and subjected internally to unequally distributed forces (F), such as in particular that of a grinder.

14. Grinder (20) comprising at least:
- a hollow cylinder (2) the internal wall of which forms a circular track (21),
- a roller (22) able to roll on said circular track,
- means for applying said roller (22) to the circular track according to a given force,
- means for supporting the hollow cylinder and guiding it in rotation,
**characterized in that** the said means for supporting said hollow cylinder and guiding it in rotation comprise at least one hydrodynamic bearing (1) according to one of claims 1 to 8, the means (5; 6; 7; 8) of weakening the cross section of said hydrodynamic bearing (1) being positioned at the area where the forces exerted by said roller (22) on said hollow cylinder (2) are applied.

15. Grinder (20) according to claim 14, in which said grinder has a single roller (22) and a single hydrodynamic bearing.
